(19) **Europäisches Patentamt European Patent Office Office européen des brevets**

(11) **EP 4 717 863 A1**

(12) **EUROPEAN PATENT APPLICATION**

(43) Date of publication:
01.04.2026 Bulletin 2026/14

(21) Application number: 24203469.2

(22) Date of filing: 30.09.2024

(51) International Patent Classification (IPC):
**E06B 3/263** (2006.01)

(52) Cooperative Patent Classification (CPC):
**E06B 3/26303; E06B 3/2632;** E06B 2003/26323

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Arconic Technologies LLC Pittsburgh, PA 15212 (US)**

(72) Inventors:
- **O'Connell, Craig**
  **Cheshire, WA71QQ (GB)**
- **Ledger, Gary**
  **Cheshire, WA71QQ (GB)**

(74) Representative: **Arnold & Siedsma Bezuidenhoutseweg 57 2594 AC The Hague (NL)**

Remarks:
Amended claims in accordance with Rule 137(2) EPC.

(54) **HIGH THERMAL PERFORMANCE PROFILE**

(57) A method of finishing a profile, wherein the profile is an inner profile or an outer profile for assembling into a profile assembly, the method comprising: treating an interior facing area of an outer surface of the profile so as to lower the emissivity of the interior facing area; or applying a protective cover or a protective film to the interior facing area of the outer surface of the profile. A method of manufacturing a profile assembly and a profile assembly produced by said method.

EP 4 717 863 A1

## Description

TECHNICAL FIELD

The present disclosure generally relates to methods for producing high thermal performance profiles, and to high thermal performance profiles produced by said methods.

BACKGROUND

Profiles used in the assembly of building facades (i.e., used in the assembly of windows, doors, curtain walls, window walls, etc.) are typically made of metal, such as aluminium or an aluminium alloy, and connected together into profile assemblies using thermal breaks, which are formed from a material having a low thermal conductivity. These thermal breaks reduce the transfer of thermal energy between the exterior and the interior of a building, thereby improving the thermal performance of the facade. For example, it is known to connect inner profiles (i.e., profiles that are exposed to the interior of the building) to outer profiles (i.e., profiles that are exposed to the exterior of the building) using thermal breaks. A plurality of profiles connected together with one or more thermal breaks is referred to herein as a "profile assembly".

While achieving a good thermal performance is an important consideration for profile assemblies for building facades, it is also necessary for these profile assemblies to meet aesthetic requirements. In many cases, the aesthetic requirements for inner profiles are different than those for outer profiles. For example, it may be desirable for an inner profile of a particular profile assembly to achieve a certain finish, e.g., to be a certain colour, and an outer profile of said profile assembly to achieve a different finish, e.g., to be a different colour to the inner profile. To obtain a dual-finish profile assembly, i.e., a profile assembly wherein a first profile has a different finish to a second profile, it is generally necessary to finish the first profile and the second profile separately and prior to assembly into the dual-finish profile assembly. For example, the outer surface of an inner profile may be powder coated to achieve a first colour, and the outer surface of an outer profile may be powder coated to achieve a second colour different from the first colour. The inner profile may then be assembled to the outer profile via one or more thermal breaks to produce a dual-colour profile assembly. As used herein, a "dual-colour profile assembly" refers to a profile assembly comprising a first profile and a second profile, wherein the first profile is finished to a different colour than the second profile.

A wide variety of finishing processes may be used to achieve the desired appearance of a particular profile. For example, as referred to above, the profile may be powder coated to achieve a desired colour. Powder coating involves the application of a powder to surfaces of the profile. The powder is then cured to form a continuous film coating surfaces of the profile. The powder used in powder coating may comprise a thermoplastic polymer. In such instances, the powder is cured by placing the profile in a curing oven to heat the powder. Curing ovens typically have temperatures of 200°C or higher. Other finishing processes that may be used to achieve the desired appearance of a particular profile include painting (i.e., wet painting) and anodizing.

A disadvantage of finishing profiles prior to assembly into profile assemblies is that not only the surfaces of the profile that will be visible from the exterior of the profile assembly are finished (i.e., the exterior surfaces), interior surfaces of the profile are also finished. As these interior surfaces are not visible from the exterior of the profile assembly, there is no aesthetic benefit to these surfaces also being finished, e.g., powder coated, wet painted or anodized. At the same time, finishing these surfaces impacts their emissivity, generally increasing their emissivity value $\varepsilon$. The emissivity value $\varepsilon$ of a surface is defined as:

$$\varepsilon = E/ES,$$

wherein: E is the thermal radiation emitted by the surface; and ES is the thermal radiation emitted by a perfect blackbody at the same temperature. For most materials, $\varepsilon$ varies from 0 to 1, with 1 being the $\varepsilon$ value of a perfect black body.

Generally, an inner profile and an outer profile of a profile assembly are joined together by two thermal breaks such that a cavity is formed between the two profiles and the two thermal breaks. To reduce the transfer of thermal energy through the cavity and between the inner and outer profiles, it is desirable for the surfaces of the thermal breaks, inner profile, and outer profile that face toward the cavity to have as low an $\varepsilon$ value as possible. As such, finishing processes which increase the $\varepsilon$ value of the interior surfaces of the inner and outer profiles increase the transfer of thermal energy through the cavity, thereby reducing the thermal performance of the profile assembly.

For example, a $U_f$ value (U frame value) may be calculated in accordance with DIN EN ISO 10 007-2 for certain frame profiles (e.g. frame profiles of windows and doors), wherein "frame profile" refers to an assembly of profiles and other components, such as thermal breaks and gaskets. The $U_f$ value (a form of U-value), is a measure of the thermal transmittance of a frame profile and has units of $W/m^2K$. The higher the $U\varepsilon$ value of a frame profile, the worse the thermal performance of said frame profile, i.e., the worse the frame profile is able to prevent the transfer of thermal energy from one side of the frame profile to the other. Where a frame profile contains an inner and an outer profile separated by a cavity as described above, the $U\varepsilon$ calculation takes into account the $\varepsilon$ value of the interior surfaces of the inner profile and the outer profile: the higher the $\varepsilon$ value, the

higher the calculated Uε value. Where the interior surfaces of the inner and outer profiles facing the cavity are dual colour (i.e., the surfaces of the inner profile facing the cavity are different in colour to the surfaces of the outer profile facing the cavity) or any anodized finish has been applied to these surfaces, a very high ε value of 0.9 for these surfaces must be used in the Uε calculation.

Without improvements in the thermal performance of dual-finish profile assemblies, it will not be possible for these profile assemblies to meet the strict requirements of energy efficiency in cool to cold climate environments of a profile geometry optimizing depth and height: the heat loss through such dual-finish profile assemblies in cool to cold climate environments is too great.

In an attempt to improve the thermal performance of dual-finish profile assemblies, it is known to introduce a thermally insulating foam into the cavity formed between the inner and outer profiles and the thermal breaks connecting and spacing these profiles. The thermally insulating foam acts to reduce the transfer of thermal energy through the cavity. However, there are a number of disadvantages to the use of thermally insulating foams. For example, the use of thermally insulating foam increases the duration of the manufacturing process of the profile assembly. Additionally, the insulating foam materials introduced into cavities in profile assemblies release significant amounts of heat energy when burned, thereby negatively impacting (i.e., reducing) the fire resistance of profile assemblies containing these insulating foam materials. Furthermore, the insulating foam materials currently used are not readily recyclable, which increases the environmental impact associated with profile assemblies containing such insulating foam materials when considering the end of life phase in the life cycle assessment of said profile assemblies.

Thus, there is a need for an improved process for producing dual-finish profile assemblies which improves the thermal performance of these profile assemblies without the need to introduce thermally insulating foam.

SUMMARY

According to the present disclosure, there is provided a method of finishing a profile, wherein the profile is an inner profile or an outer profile for assembling into a profile assembly, wherein the method comprises: (a) applying a coating to an outer surface of the profile; and (b) following step (a), treating an interior facing area of the outer surface so as to lower the emissivity of the interior facing area, wherein the profile comprises a first and a second means for attachment to a thermal break and the interior facing area is located intermediate the first and the second means for attachment, and wherein said treating comprises applying a layer that is highly reflective to at least infrared radiation to said interior facing area.

In preferred arrangements, the profile is made of aluminum or an aluminum alloy.

Preferably, the layer that is highly reflective to at least infrared radiation exhibits a thermal emissivity ε of 0.1 or less, more preferably 0.05 or less, most preferably 0.02 or less.

Advantageously, the layer that is highly reflective to at least infrared radiation is attached to the interior facing area via an adhesive layer. Preferably, the adhesive layer and the layer that is highly reflective to at least infrared radiation are applied to the interior facing area as a laminate in the form of an adhesive tape or an adhesive film.

In preferred arrangements, the step of applying a coating to the outer surface comprises one or more of: anodizing the outer surface; powder coating the outer surface; and wet painting the outer surface. Most preferably, the step of applying a coating to the outer surface comprises powder coating the outer surface.

According to the present disclosure, there is also provided a method of finishing a profile, wherein the profile is an inner profile or an outer profile for assembling into a profile assembly, wherein the method comprises: (a) applying a protective film to an interior facing area of an outer surface of the profile, wherein the profile comprises a first and a second means for attachment to a thermal break and the interior facing area is located intermediate the first and the second means for attachment; (b) following step (a), applying a coating to the outer surface of the profile; and (c) following step (b), removing the protective film from the interior facing area of the profile.

In preferred arrangements, the profile is made of aluminum or an aluminum alloy.

In preferred arrangements, the step of applying a coating to the outer surface comprises one or more of: anodizing the outer surface; powder coating the outer surface; and wet painting the outer surface. Most preferably, the step of applying a coating to the outer surface comprises powder coating the outer surface. In preferred arrangements, the protective film is heat resistant, preferably heat resistant to temperatures of 200°C or higher.

According to the present disclosure, there is further provided a method of finishing a profile, wherein the profiles is an inner profile or an outer profile for assembling into a profile assembly, wherein the method comprises: (a) attaching a protective cover to the profile so as to cover an interior facing area of an outer surface of the profile, wherein the profile comprises a first and a second means for attachment to a thermal break and the interior facing area is located intermediate the first and the second means for attachment; (b) following step (a), applying a coating to the outer surface of the profile, wherein applying the coating comprises powder coating the outer surface of the profile; and (c) following step (b) detaching the protective cover from the profile.

In preferred arrangements, the profile is made of aluminum or an aluminum alloy.

Preferably, attaching the protective cover to the profile comprises detachably attaching the protective cover to at least one of the first and the second means for attachment to a thermal break, more preferably to both of the first and the second means for attachment to a thermal break.

In preferred arrangements, powder coating involves the step of introducing the profile into a curing oven. Advantageously, the protective cover is made of: a polymer heat resistant up to a temperature of at least 200°C; aluminum; or an aluminum alloy, preferably wherein the protective cover is made of a polymer heat resistant up to a temperature of at least 200°C.

According to the present disclosure, there is further provide a method of manufacturing a profile assembly, wherein the method comprises: (a) finishing a first profile according to any of the methods described above; and (b) connecting the first and the second means of attachment of the first profile to a first and a second means of attachment of a second profile via two thermal breaks such that a cavity is formed between: the interior facing area of the first profile; an interior facing area of the second profile; and the thermal breaks.

In preferred arrangements, both the first and the second profile are made of aluminum or an aluminum alloy.

Preferably, the method further comprises, prior to step (b), finishing the second profile according to any of the finishing methods described above.

Advantageously, the coating on the outer surface of the first profile is a first coating and the coating on the outer surface of the second profile is a second coating, and wherein the first coating is different from the second coating.

In preferred arrangements, at least the first profile comprises the layer that is highly reflective to at least infrared radiation, preferably wherein both the first profile and the second profile comprise the layer that is highly reflective to at least infrared radiation.

Each thermal break comprises an interior facing area, i.e., a surface area facing towards the cavity in the profile assembly. In preferred arrangements, the interior facing area of one or preferably both of the thermal breaks has a layer which is highly reflective to at least infrared radiation applied thereto.

According to the present disclosure, there is provided a profile assembly comprising: an inner profile having a first coating on an outer surface thereof; an outer profile having a second coating on an outer surface thereof; and two thermal breaks, wherein the inner profile is connected to the outer profile via the two thermal breaks, and wherein a cavity is formed between the thermal breaks, an interior facing area of the inner profile; and an interior facing area of the outer profile. Each interior facing area is independently: uncoated with either the first or the second coating; or has a layer which is highly reflective to at least infrared applied thereto, wherein, when both the interior facing area of the inner profile and the interior facing area of the outer profile are uncoated with the first or second coating, the first coating is different from the second coating.

In preferred arrangements, both the inner and the outer profile are made of aluminum or an aluminum alloy.

Each thermal break comprises an interior facing area, i.e., a surface area facing towards the cavity in the profile assembly. In preferred arrangements, the interior facing area of one or preferably both of the thermal breaks has a layer which is highly reflective to at least infrared radiation applied thereto.

Preferably, the layer that is highly reflective to at least infrared radiation exhibits a thermal emissivity $\varepsilon$ of 0.1 or less, preferably 0.05 or less, most preferably 0.02 or less

In preferred arrangements, the profile assembly is a dual-finish profile assembly.

These and other aspects and features of the present disclosure will be more readily understood when read in conjunction with the accompanying drawings. Moreover, it must be noted that the various features of any of the above statements may be combined without restriction, as will be readily appreciated by those skilled in the art.

## BRIEF DESCRIPTION OF THE DRAWINGS

Figure 1 is a cross-sectional view of a profile assembly in accordance with the present disclosure.

Figure 2A is a cross-sectional view of a profile with a protective clip attached thereto in accordance with the present disclosure.

Figure 2B is a cross-sectional view of a profile with an alternative protective clip attached thereto in accordance with the present disclosure.

Figure 2C is a cross-sectional view of a profile with an alternative protective clip attached thereto in accordance with the present disclosure.

Figure 3 is a cross-sectional view of an alternative profile assembly in accordance with the present disclosure.

## DETAILED DESCRIPTION

The present disclosure provides methods of finishing an inner or an outer profile for assembling into a profile assembly.

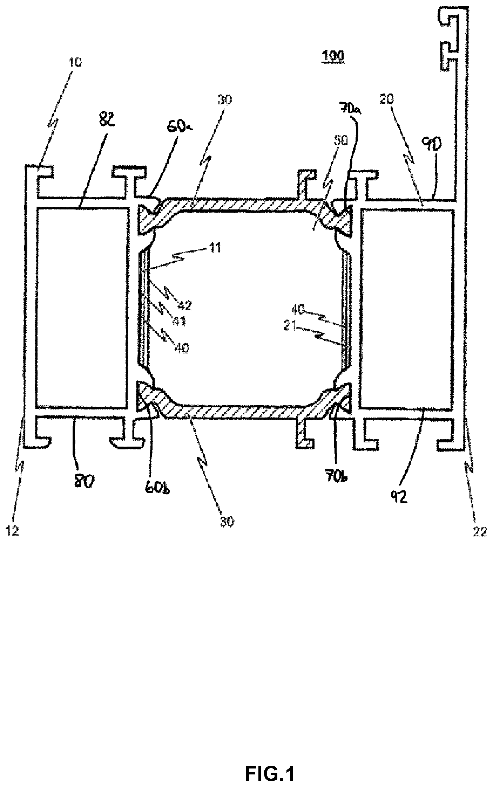

Referring now to FIG. 1, according to a first embodiment, a method of finishing an inner or an outer profile 10, 20 is provided. The method comprises (a) applying a coating to an outer surface 80, 90 of an inner profile 10 or an outer profile 20; and (b) following step (a), treating an interior facing area 11, 21 of the outer surface 80, 90 so as to lower the emissivity of the interior facing area 11, 21, wherein said treating comprises applying a layer 42 which is highly reflective to at least infrared radiation to said interior facing area 11, 21.

In some arrangements, the profile 10, 20 may be hollow so as to further comprise an inner surface 82, 92. In such arrangements, the method may further comprise applying the coating to the inner surface 82, 92 of the profile 10, 20. However, in preferred arrangements, the coating is applied only to the outer surface 80, 90 of the hollow profile 10, 20.

In preferred arrangements, the profile 10, 20 is made of aluminum or an aluminum alloy. The profile 10, 20 may be an aluminum or aluminum alloy extrusion.

The specific coating and coating process are selected, at least in part, so that the exterior facing area 12, 22 of the outer surface 80, 90 of the profile 10, 20 achieves a desired appearance, e.g., colour and/or surface finish. The exterior facing area 12, 22 of the profile 10, 20 is the area of the profile 10, 20 visible from the exterior of a profile assembly 100 once the profile 10, 20 has been assembled into the profile assembly 100. The coating and coating process may also be selected to help improve the corrosion resistance and/or the resistance to wear of the outer surface 80, 90 of the profile 10, 20.

In preferred arrangements, the step of applying a coating to the outer surface 80, 90 of the inner or outer profile 10, 20 may comprise powder coating the outer surface 80, 90. Powder coating comprises the application of a powder to the outer surface 80, 90 of the profile 10, 20. The powder is then cured to form a continuous film coating the outer surface 80, 90 of the profile 10, 20. In preferred arrangements, the powder used for powder coating may comprise a thermoplastic polymer. In such instances, the powder is cured by placing the profile 10, 20 having powder applied to its outer surface 80, 90 in a curing oven to heat the powder. Curing ovens typically have temperatures of 200°C or higher. Other finishing processes that may be used to achieve the desired appearance of a particular profile include painting (i.e., wet painting by e.g. spraying) and anodizing (i.e., forming an oxide coating).

The method comprises, subsequent to applying the coating to the outer surface 80, 90 of the profile 10, 20, treating an interior facing area 11, 21 of the outer surface 80, 90 so as to lower the emissivity value $\varepsilon$ of the interior facing area 11, 21. The treatment lowers the emissivity value $\varepsilon$ of the interior facing area 11, 21 when compared to the emissivity $\varepsilon$ of the interior facing area 11, 21 prior to the treatment. In other words, after treatment to lower the emissivity $\varepsilon$, the emissivity $\varepsilon$ of the interior facing area 11, 21 is lower than the emissivity $\varepsilon$ of the remainder of the coated outer surface 80, 90 of the profile 10, 20. In preferred arrangements, after treatment to lower the emissivity $\varepsilon$, the emissivity $\varepsilon$ of the interior facing area 11, 21 is lower than the emissivity $\varepsilon$ of the outer surface 80, 90 prior to application of the coating, i.e., lower than the emissivity of the uncoated outer surface 80, 90.

The profile 10, 20 comprises a first means for attachment 60a, 70a to a thermal break 30 and a second means for attachment 60b, 70b to a thermal break 30. As depicted in FIG.1, the interior facing area 11, 21 is located intermediate the first 60a, 70a and second 60b, 70b means for attachment. In preferred arrangements as depicted, the first means of attachment 60a, 70a and/or the second means of attachment 60b, 70b comprises a groove or a channel for receipt of a portion of a thermal break 30. In particularly preferred arrangements, both the first means of attachment 60a, 70a and the second means of attachment 60b, 70b comprise a groove or channel for receipt of a portion of a thermal break 30.

The step of treating an interior facing area 11, 21 of the outer surface 80, 90 of the profile 10, 20 so as to lower the emissivity $\varepsilon$ of the interior facing area 11, 21 comprises applying a layer 42 which is highly reflective to at least infrared radiation to said interior facing area 11, 21. In preferred arrangements, the layer 42 has an $\varepsilon$ value of 0.1 or less, preferably 0.05 or less, most preferably 0.02 or less.

The highly reflective layer 42 of the present disclosure may be produced from a number of different materials. In preferred arrangements, the protective film comprises aluminum.

The highly reflective layer 42 may be attached to the interior facing area 11, 21 via an adhesive layer 41. For example, the step of treating the interior facing area 11, 21 may comprise first applying an adhesive layer 41 to the interior facing area 11, 21 followed by attaching the highly reflective layer 42 to the adhesive layer 41. The highly reflective layer 42 may be in the form of a strip or a sheet.

In alternative preferred arrangements, the highly reflective layer 42 may be part of a laminate 40 in the form of an adhesive tape or an adhesive film. The laminate 40 may comprise an adhesive layer 41 such that the laminate 40 may be attached to the interior facing area 11, 21 via said adhesive layer 41.

In preferred arrangements, the highly reflective layer 42 is applied to majority of or the entirety of the interior facing area 11, 21 so as to cover the majority or entirety of the interior facing area 11, 21. Covering at least the majority of the interior facing area 11, 21 ensures a low emissivity value $\varepsilon$ for the interior facing area 11, 21, thereby ensuring the greatest improvement in thermal performance of the profile 10, 20.

It can be appreciated that lowering the emissivity $\varepsilon$ of the interior facing area 11, 21 improves the thermal performance of the profile 10, 20. When the profile 10, 20 is assembled into a profile assembly 100, as depicted in FIG. 1, via attachment to thermal breaks 30, the interior facing area 11, 21 faces into a cavity 50 formed between the profile 10, 20, the thermal breaks 30, and a second profile 10, 20. As a result of the lowered emissivity $\varepsilon$ of the interior facing area 11, 21 the transfer of thermal energy across the cavity 50 is reduced when compared to the transfer across a cavity of an identical profile assembly not having a highly reflective layer 42 applied to the interior facing area 11, 21.

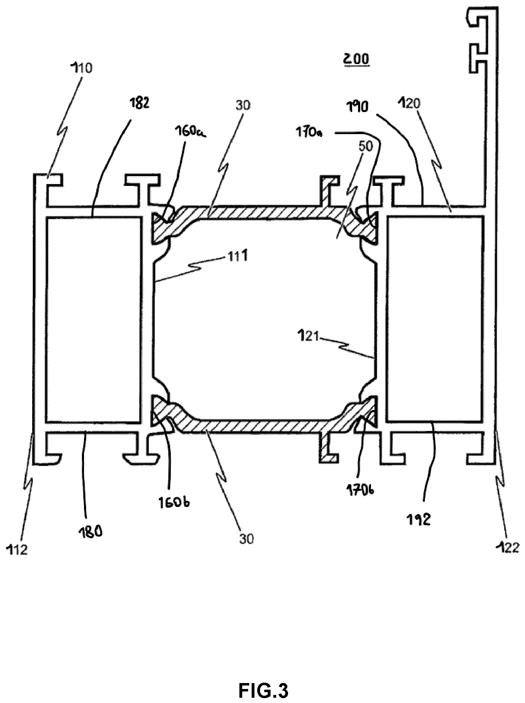

Referring now to FIG. 3, according to a second embodiment, a method of finishing an inner or an outer profile 110, 120 is provided. The method comprises: (a) applying a protective film to an interior facing area 111, 121 of an outer surface 180, 190 of the profile 110, 120; (b) following step (a), applying a coating to the outer surface 180, 190 of the profile 110, 120; and (c) following step (b), removing the protective film from the interior facing area 111, 121.

As described above in connection with the first embodiment, the profile 110, 120 comprises a first means for attachment 160a, 170a to a thermal break 30 and a second means for attachment 160b 170b to a thermal break 30. The interior facing area 111, 121 is located intermediate the first 160a, 170a and second 160b, 170b means for attachment. In preferred arrangements as depicted, the first means of attachment 160a, 170a and/or the second means of attachment 160b, 170b comprises a groove or a channel for receipt of a portion of a thermal break 30. In particularly preferred arrangements, both the first means of attachment 160a, 170a and the second means of attachment 160b, 170b comprise a groove or channel for receipt of a portion of a thermal break 30.

Applying a protective film to the interior facing area 111, 121 may comprise the steps of: (a) applying an adhesive layer to the interior facing area 111, 121; and (b) applying the protective film to the adhesive layer. Alternatively, the protective film may comprise an adhesive surface. In such arrangements, the protective film may be applied to the interior facing area 111, 121 by bringing the adhesive surface into contact with the interior facing area 111, 121.

In preferred arrangements, the protective film is applied to the majority of or the entirety of the interior facing area 111, 121 so as to cover the majority of or the entirety of the interior facing area 111, 121.

After the protective film has been applied to the interior facing area 111, 121, a coating is applied to the outer surface 180, 190 of the profile 110, 120. As disclosed in connection with the first embodiment, the specific coating and coating process are selected, at least in part, so that the exterior facing area 112, 122 of the outer surface 180, 190 of the profile 110, 120 achieves a desired appearance, e.g., colour and/or surface finish. The coating may also be selected to help to improve the corrosion resistance and/or the resistance to wear of the outer surface 180, 190 of the profile 110, 120.

In some arrangements, the profile 110, 120 may be hollow so as to further comprise an inner surface 182, 192. In such arrangements, the method may further comprise applying the coating to the inner surface 182, 192 of the profile 110, 120. However, in preferred arrangements, the coating is applied only to the outer surface 180, 190 of the hollow profile 110, 120.

In preferred arrangements, the profile 110, 120 is made of aluminum or an aluminum alloy. The profile 110, 120 may be an aluminum or aluminum alloy extrusion.

The step of applying a coating to the outer surface 180, 190 of the inner or outer profile 110, 120 may comprise powder coating the outer surface 180, 190. Powder coating comprises the application of a powder to the outer surface 180, 190 of the profile 110, 120. The powder is then cured to form a continuous film coating the outer surface 180, 190 of the profile 110, 120. In preferred arrangements, the powder used for powder coating may comprise a thermoplastic polymer. In such instances, the powder is cured by placing the profile 110, 20 having powder applied to its outer surface 180, 190 in a curing oven to heat the powder. Curing ovens typically have temperatures of 200°C or higher. Other finishing processes that may be used to achieve the desired appearance of a particular profile include painting (i.e., wet painting by e.g. spraying) and anodizing (i.e., forming an oxide coating).

The protective film is configured so as to withstand the conditions used in the coating step without degradation or significant degradation. For example, in arrangements where the profile 110, 120 is heated during the coating step, the protective film is heat resistant up to at least the temperature(s) reached during the coating step. Heat resistance is required to prevent degradation of the protective film during the coating step. In arrangements where the profile 110, 120 is powder coated, including being introduced to into a curing oven to cure the powder, the protective film must be heat resistant to temperatures of 200°C or more. In other words, the protective film must be able to withstand the temperatures of the curing oven.

The protective film of the present disclosure may be produced from a number of different materials. In preferred arrangements, the protective film comprises a polymer. In particularly preferred arrangements, the protective film is a polymer tape.

The protective film allows the outer surface 180, 190 to be coated in the usual way but prevents a coating from being applied to the interior facing area 111, 121 covered by the protective film, i.e., it protects the interior facing area 111, 121 from being coated. While a coating may form on the protective film during the coating step, this coating does not come into contact with or bond to the interior facing area 111, 121 of the outer surface 180, 190, because the interior facing area 111, 121 is covered by the protective film.

It can be appreciated that, once the protective film is removed, the outer surface 180, 190 of the profile 110, 120 comprises a coating everywhere apart from the interior facing area 111, 121: the interior facing area 111, 121 remains uncoated. As such the interior facing area 111, 121 retains the emissivity value $\varepsilon$ of the uncoated profile 110, 120. For example, where the profile 111, 121 is made of aluminum or an aluminum alloy, the interior facing area 111, 121 retains the emissivity value $\varepsilon$ of an uncoated aluminum/ aluminum alloy, typically in the range of 0.1 to 0.3. This emissivity value $\varepsilon$ of the interior

facing area 111, 121 is lower than that for remainder of the outer surface 180, 190, which comprises the coating. For the calculation of a $U\epsilon$ value as described above, the emissivity of an uncoated aluminum/aluminum alloy interior facing area 111, 121 is generally taken to be 0.3.

The removing step (c) may comprise peeling the protective film from the interior facing area 111, 121. The method may further comprise the step of cleaning the interior facing area 111, 121 to remove any residual material from the protective film left attached to the interior facing area 111, 121, e.g., adhesive, after the removing step (c).

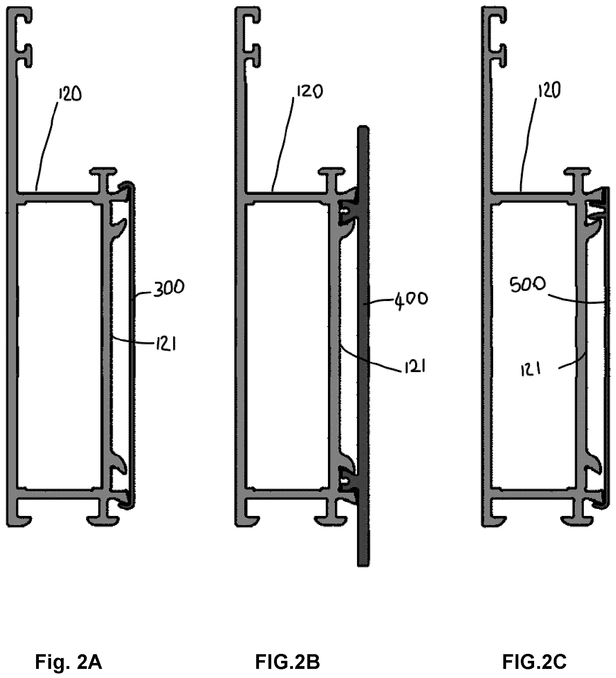

Referring now to FIGS. 2A-2C, according to a third embodiment, a method of finishing an inner or an outer profile 110, 120 is provided. The method comprises: (a) attaching a protective cover 300, 400, 500 to the profile 110, 120 so as to cover an interior facing area 111, 121 of an outer surface 180, 190 of the profile 110, 120; (b) following step (a), applying a coating to the outer surface 180, 190 of the profile 110, 120, wherein applying a coating to the outer surface 180, 190 comprises powder coating the outer surface 180, 190; and (c). following step (b), detaching the protective cover 300, 400, 500 from the profile 110, 120.

As described above in connection with the first and second embodiments, the profile 110, 120 comprises a first means for attachment 160a, 170a to a thermal break 30 and a second means for attachment 160b 170b to a thermal break 30. The interior facing area 111, 121 is located intermediate the first 160a, 170a and second 160b, 170b means for attachment. In preferred arrangements as depicted, the first means of attachment 160a, 170a and/or the second means of attachment 160b, 110b comprises a groove or a channel for receipt of a portion of a thermal break 30. In particularly preferred arrangements, both the first means of attachment 160a, 170a and the second means of attachment 160b, 170b comprise a groove or channel for receipt of a portion of a thermal break 30.

The protective cover is configured for detachable attachment to the profile 110, 120. In preferred arrangements, the protective cover 300, 400, 500 is configured for detachable attachment to at least one of the first 160a, 170a and second 160b, 170b means for attachment to a thermal break 30. Preferably, the protective cover 300, 400, 500 is configured for detachable attachment to both of the first 160a, 170a and second 160b, 170b means for attachment to a thermal break 30. FIGS. 2A-2C depict a number of preferred protective cover 300, 400, 500 arrangements, wherein the protective cover is configured for detachable attachment to both of the first 160a, 170a and second 160b, 170b means for attachment to a thermal break 30. As depicted in FIGS. 2A and 2C, the protective cover 300, 500 may comprise one or more hook portions, for detachable attachment to the first 160a, 170a or second 160b, 170b means for attachment to a thermal break 30. In arrangements wherein the protective cover 300 comprises two hook portions, attaching the protective cover 300 to the profile 110, 120 may comprise slidably attaching the protective cover 300 to the profile 110, 120. In some arrangements, as depicted in FIG. 2C, the protective cover 500 may comprise one or more clip portions, for detachable attachment to the first 160a, 170a or second 160b, 170b means for attachment to a thermal break 30. In some arrangements, as depicted in FIG. 2B, the protective cover 400 may comprise one or more protrusions for detachable attachment to the first 160a, 170a or second 160b, 170b means for attachment to a thermal break 30. For example, where the first means of attachment 160a, 170a and/or the second means of attachment 160b, 110b comprises a groove or a channel for receipt of a portion of a thermal break 30, the one or more protrusions may be configured for receipt within the channel or groove. In arrangements as depicted in FIG. 2B, wherein the protective cover 400 comprises two protrusions, attaching the protective cover 400 to the profile 110, 120 may comprise slidably attaching the protective cover 400 to the profile 110, 120.

The protective cover 300, 400, 500 of the present disclosure may be produced from a number of different materials. In preferred arrangements, the protective cover is made of a heat resistant polymer, heat resistant up to 200°C or higher. In alternative arrangements, the protective cover is made of aluminum or an aluminum alloy. It can be appreciated that aluminum and aluminum alloys are also able to withstand temperatures of 200°C or higher.

Like the protective film described above, the protective cover 300, 400, 500 is configured so as to withstand the conditions used in the coating step without degradation. For example, in arrangements where the profile 110, 120 is heated during the coating step, the protective cover 300, 400, 500 is heat resistant up to at least the temperature(s) reached during the coating step. In arrangements where the profile is introduced to into a curing oven to cure the powder during powder coating, the protective cover 300, 400, 500 must be heat resistant to temperatures of 200°C or more. In other words, the protective cover 300, 400, 500 must be able to withstand the temperatures of the curing oven.

The protective cover 300, 400, 500 allows the outer surface 180, 190 to be powder coated in the usual way but prevents a coating from being applied to the interior facing area 111, 121 covered by the protective cover, i.e., it protects the interior facing area 111, 121 from being coated. While a coating may form on the protective cover 300, 400, 500 during the coating step, this coating does not come into contact with or bond to the interior facing area 111, 121 of the outer surface 180, 190, because the interior facing area 111, 121 is covered by the protective cover 300, 400, 500.

It can be appreciated that, once the protective cover is removed, the outer surface 180, 190 of the profile 110, 120 comprises a coating everywhere apart from the interior facing area 111, 121: the interior facing area 111, 121 remains uncoated. As such the interior facing area 111, 121 retains the emissivity value $\varepsilon$ of the uncoated profile 110, 120. For example, where the profile 111, 121 is made of aluminum or an aluminum alloy, the interior facing area 111, 121 retains the emissivity value $\varepsilon$ of an uncoated aluminum/ aluminum alloy, typically in the range of 0.1 to 0.3 . This emissivity value $\varepsilon$ of the interior facing area 111, 121 is lower than that for remainder of the outer surface 180, 190, which comprises the coating. For the calculation of a Uf value as described above, the emissivity of an uncoated aluminum/aluminum alloy interior facing area 111, 121 is generally taken to be 0.3.

The present disclosure also provides a method of manufacturing a profile assembly 100, 200, the method comprising: finishing an first profile 10, 110 according to any of the first to third embodiments described above; and connecting the first 60a, 160a and second 60b, 160b means of attachment of the first profile 10, 110 to a first 70a, 170a and a second 70b, 170b means of attachment of a second profile via two thermal breaks 30 such that a cavity 50 is formed between the interior facing areas 11, 21, 111, 121 and the thermal breaks 30.

In preferred arrangements, both the first and the second profile are finished according to any of the first to third embodiments described above. However, it can be appreciated that, even when only one profile is finished according to the first to third embodiments described above, an improvement in thermal performance, compared to when both profiles are finished prior to assembly so as to have a coated interior facing area, is achieved.

In preferred arrangements, each profile 10, 110, 20, 120 is made of aluminum or an aluminum alloy. Each profile 10, 110, 20, 120 may be an aluminum or aluminum alloy extrusion.

In preferred arrangements, both the first profile 10 and the second profile 20 are finished according to the first embodiment, i.e., have a layer 42 which is highly reflective to at least infrared radiation applied to the interior facing area 11, 21 thereof. In particularly preferred arrangements, the highly reflective layer 42 has a lower emissivity value $\varepsilon$ than the outer surface 80, 90 prior to coating. As such, transfer of thermal energy across the cavity 50 is reduced to a greater extent than when one or both of the first profile 10, 110 and second profile 20, 120 are finished by the method of either the second or the third embodiment. In other words, the resulting profile assembly 100 achieves the best thermal performance.

In alternative arrangements, both the first and the second profile are finished according to the second embodiment. In alternative arrangements, both the first and the second profile are finished according to the third embodiment. In alternative arrangements, the first profile is finished according to the first embodiment and the second profile is finished according the second embodiment. In alternative arrangements, the first profile is finished according to the first embodiment and the second profile is finished according the third embodiment. In alternative arrangements, the first profile is finished according to the second embodiment and the second profile is finished according the third embodiment.

In preferred arrangements, the coating on the outer surface 80, 180 of the first profile 10, 110 is a first coating and the coating on the outer surface 90, 190 of the second profile 20, 120 is a second coating, wherein the first coating is different from the second coating, wherein "different", as used herein in connection with coatings, refers to different in colour, and/or having a different surface texture, and/or different in chemical structure. In some arrangements, the first coating has a first colour and the second coating has a second colour. It can be appreciated that the method allows for the production of a dual-finish profile assembly, e.g., a dual-colour profile assembly, wherein the interior facing areas 11, 111, 21, 121 have lower emissivity values $\varepsilon$ than when compared to traditional dual-finish profile assemblies, wherein the interior facing areas are coated during finishing of the outer surface 80, 180, 90, 190. In other words, the method allows for the production of dual-finish profile assemblies having improved thermal performance. The method, therefore, eliminates the need to introduce thermally insulating foam into the cavity 50 to compensate for increased emissivity values $\varepsilon$ resulting from coated interior facing areas.

The thermal breaks 30 may have a variety of different configurations: the configuration depicted in FIGS. 1 and 3 represents a preferred arrangement but is not intended to be limiting. Furthermore, each thermal break 30 of the profile assembly 100, 200 may have a different configuration.

Each thermal break 30 comprises an interior facing area, i.e., a surface area facing towards the cavity 50 in the profile assembly 100, 200. In preferred arrangements, the interior facing area of one or each of the thermal breaks 30 may be treated, prior to assembly into the profile assembly 100, 200, so as to lower the emissivity $\varepsilon$ of the interior facing area, wherein said treating comprises applying a layer which is highly reflective to at least infrared radiation to said interior facing area. The layer which is highly reflective to at least infrared radiation may be as described above in connection with the layer 42 and/or applied as described above in connection with layer 42. The highly reflective layer applied to the thermal break 30 has a lower emissivity $\varepsilon$ value than the interior facing area of the thermal break prior to application of the highly reflective layer. The highly reflective layer may be applied to part of or the entirety of the interior facing area of the thermal break. It can be appreciated that application of a highly reflective layer to one or both of the thermal breaks 30 further reduces the transmission of thermal energy across the cavity 50.

The present disclosure also provides a profile assembly 100, 200 comprising: an inner profile 10, 110 having a first coating on an outer surface 80, 180 thereof; an outer profile 20, 120 having a second coating on an outer surface 90, 190 thereof; and two thermal breaks 30, wherein the inner profile is connected to the outer profile via the two thermal breaks 30, and wherein a cavity 50 is formed between the thermal breaks 30, an interior facing area 11, 111 of the inner profile 10, 110, and an interior facing area 21, 121 of the outer profile 20, 120. Each interior facing area 11, 111, 21, 121 is either uncoated with the first or the second coating, or has a layer 42 which is highly reflective to at least infrared radiation applied thereto. The layer 42 that is highly reflective to at least infrared radiation has an ε value that is lower than the ε value of the coated outer surface 80, 90 of the profile 10, 20 to which the highly reflective layer 42 is applied. When both the interior facing area 111 of the inner profile 110 and the interior facing area 121 of the outer profile 120 are uncoated with the first or second coating, the first coating is different from the second coating, "different" having the meaning disclosed herein. In other words, when both the interior facing area 111 of the inner profile 110 and the interior facing area 121 of the outer profile 120 are uncoated with the first or second coating, the profile assembly 200 is a dual-finish profile assembly, e.g., a dual-colour profile assembly.

Preferably, the profile assembly 100, 200 is a dual-finish profile assembly. In some arrangements, the profile assembly 100, 200 dual-colour profile assembly.

The coated inner profile 10, 110 and the coated outer profile 20, 120 may be produced by any of the finishing methods disclosed herein.

In preferred arrangements, each profile 10, 110, 20, 120 is made of aluminum or an aluminum alloy. Each profile 10, 110, 20, 120 may be an aluminum or aluminum alloy extrusion.

In preferred arrangements both the inner profile 10 and the outer profile 20 have a layer 42 that is highly reflective to at least infrared radiation applied to the interior facing area 11, 21 thereof.

In preferred arrangements, the layer 42 has an ε value of 0.1 or less, preferably 0.05 or less, most preferably 0.02 or less.

As a result of the uncoated interior facing areas 11, 111, 21, 121 and/or highly reflective layers 42, dual-finish profile assemblies disclosed herein achieve reduced transfer of thermal energy across the cavity 50 when compared dual-finish profile assemblies known in the art.

In some arrangements, the highly reflective layer 42 has a lower emissivity value ε than an uncoated outer surface 80, 90. In such arrangements, the profile assemblies disclosed herein achieve reduced transfer of thermal energy across the cavity 50 when compared to profile assemblies known in the art that do not comprise such a highly reflective layer 42.

Each thermal break 30 also comprises an interior facing area, i.e., a surface area facing towards the cavity 50. In preferred arrangements, the interior facing area of one or each of the thermal breaks 30 has a layer which is highly reflective to at least infrared radiation applied thereto. The highly reflective layer applied to the thermal break 30 has a lower emissivity ε value than the interior facing area of the thermal break prior to application of the highly reflective layer. The highly reflective layer may be applied to part of or the entirety of the interior facing area of the thermal break. It can be appreciated that the highly reflective layer applied to one or both of the thermal breaks 30 reduces the transmission of thermal energy across the cavity 50.

The disclosed products and methods are well adapted to attain the ends and advantages mentioned as well as those that are inherent therein. The particular embodiments disclosed above are illustrative only, as the teachings of the present disclosure may be modified and practiced in different but equivalent manners apparent to those skilled in the art having the benefit of the teachings herein. Furthermore, no limitations are intended to the details of construction or design herein shown, other than as described in the appended claims. It is therefore evident that the particular illustrative embodiments disclosed above may be altered, combined, or modified and all such variations are considered within the scope of the present disclosure. The products and methods illustratively disclosed herein may suitably be practiced in the absence of any element that is not specifically disclosed herein and/or any optional element disclosed herein. While products and methods are described in terms of "comprising," "containing," or "including" various components, the systems and methods can also "consist essentially of" or "consist of" the various components. All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the elements that it introduces. If there is any conflict in the usages of a word or term in this specification and one or more patent or other documents that may be incorporated herein by reference, the definitions that are consistent with this specification should be adopted.

As used herein, the phrase "at least one of" preceding a series of items, with the terms "and" or "or" to separate any of the items, modifies the list as a whole, rather than each member of the list (i.e., each item). The phrase "at least one of" allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

Although various example embodiments have been disclosed, a person of ordinary skill in this art would recognize that certain modifications would fall within the scope of the appended claims. For that reason, the appended claims should be studied to determine the scope and content of this disclosure.

**Claims**

1. A method of finishing a profile, wherein the profile is an inner profile or an outer profile for assembling into a profile assembly, wherein the method comprises:

   (a) applying a coating to an outer surface of the profile; and
   (b) following step (a), treating an interior facing area of the outer surface so as to lower the emissivity of the interior facing area, wherein the profile comprises a first and a second means for attachment to a thermal break and the interior facing area is located intermediate the first and the second means for attachment, and wherein said treating comprises applying a layer that is highly reflective to at least infrared radiation to said interior facing area.

2. A method of finishing a profile, wherein the profile is an inner profile or an outer profile for assembling into a profile assembly, wherein the method comprises:

   (a) applying a protective film to an interior facing area of an outer surface of the profile, wherein the profile comprises a first and a second means for attachment to a thermal break and the interior facing area is located intermediate the first and the second means for attachment;
   (b) following step (a), applying a coating to the outer surface of the profile; and
   (c) following step (b), removing the protective film from the interior facing area of the profile.

3. A method of finishing a profile, wherein the profiles is an inner profile or an outer profile for assembling into a profile assembly, wherein the method comprises:

   (a) attaching a protective cover to the profile so as to cover an interior facing area of an outer surface of the profile, wherein the profile comprises a first and a second means for attachment to a thermal break and the interior facing area is located intermediate the first and the second means for attachment;
   (b) following step (a), applying a coating to the outer surface of the profile, wherein applying the coating comprises powder coating the outer surface of the profile; and
   (c) following step (b) detaching the protective cover from the profile.

4. The method of claim 1, wherein the layer that is highly reflective to at least infrared radiation exhibits a thermal emissivity $\varepsilon$ of 0.1 or less, preferably 0.05 or less, most preferably 0.02 or less.

5. The method of claim 1 or claim 4, wherein the layer that is highly reflective to at least infrared radiation is attached to the interior facing area via an adhesive layer.

6. The method of claim 5, wherein the adhesive layer and the layer that is highly reflective to at least infrared radiation are applied to the interior facing area as a laminate in the form of an adhesive tape or an adhesive film.

7. The method of claim 2, wherein the protective film is heat resistant up to a temperature of at least 200°C.

8. The method of claim 3, wherein attaching the protective cover to the profile comprises detachably attaching the protective cover to at least one of the first and the second means for attachment to a thermal break, preferably to both of the first and the second means for attachment to a thermal break.

9. The method of claim 3 or claim 8, wherein the protective cover is made of: a polymer heat resistant up to a temperature of at least 200°C; aluminum; or an aluminum alloy, preferably wherein the protective cover is made of a polymer heat resistant up to a temperature of at least 200°C.

10. The method of any of claims 1-2 or 4-7, wherein the step of applying a coating to the outer surface comprises one or more of: anodizing the outer surface; powder coating the outer surface; and wet painting the outer surface.

11. A method of manufacturing a profile assembly, wherein the method comprises:

    (a) finishing a first profile according to the method of any of claims 1 to 10;
    (b) connecting the first and the second means of attachment of the first profile to a first and a second means of attachment of a second profile via two thermal breaks such that a cavity is formed between: the interior facing area of the first profile; an interior facing area of the second profile; and the thermal breaks.

12. The method of claim 11, wherein the method further comprises, prior to step (b), finishing the second profile according to the method of any of claims 1 to 10.

**13.** The method of claim 12, wherein the coating on the outer surface of the first profile is a first coating and the coating on the outer surface of the second profile is a second coating, and wherein the first coating is different from the second coating.

**14.** The method of any of claims 11 to 13, wherein at least the first profile comprises the layer that is highly reflective to at least infrared radiation, preferably wherein both the first profile and the second profile comprise the layer that is highly reflective to at least infrared radiation.

**15.** A profile assembly comprising:

an inner profile having a first coating on an outer surface thereof;
an outer profile having a second coating on an outer surface thereof; and
two thermal breaks, wherein the inner profile is connected to the outer profile via the two thermal breaks,
wherein a cavity is formed between the thermal breaks, an interior facing area of the inner profile; and an interior facing area of the outer profile,
wherein each interior facing area is independently:

uncoated with either the first or the second coating; or
has a layer which is highly reflective to at least infrared applied thereto,

wherein, when both the interior facing area of the inner profile and the interior facing area of the outer profile are uncoated with the first or second coating, the first coating is different from the second coating.

**Amended claims in accordance with Rule 137(2) EPC.**

**1.** A method of manufacturing a profile assembly comprising a first profile and a second profile, wherein each profile comprises a first and a second means for attachment to a thermal break and an interior facing area of an outer surface located intermediate the first and the second means for attachment, and wherein the method comprises:

(a) finishing a first profile, wherein the finishing comprises:

(i). applying a coating to the outer surface of the profile before treating the interior facing area so as to lower the emissivity of the interior facing area, wherein said treating comprises applying a layer that is highly reflective to at least infrared radiation to said interior facing area; or
(ii). applying a protective film to the interior facing area before applying a coating to the outer surface of the profile, and finally removing the protective film from the interior facing area of the profile; or
(iii). attaching a protective cover to the profile so as to cover the interior facing area before applying a coating to the outer surface of the profile, and finally detaching the protective cover from the profile, wherein applying the coating comprises powder coating the outer surface of the profile:

(b) finishing a second profile according to any of (i) to (iii); and
(c) connecting the first and the second means of attachment of the first profile to a first and a second means of attachment of the second profile via two thermal breaks such that a cavity is formed between: the interior facing area of the first profile; the interior facing area of the second profile; and the thermal breaks.

**2.** The method of claim 1, wherein the layer that is highly reflective to at least infrared radiation exhibits a thermal emissivity $\varepsilon$ of 0.1 or less, preferably 0.05 or less, most preferably 0.02 or less.

**3.** The method of claim 1 or claim 2, wherein the layer that is highly reflective to at least infrared radiation is attached to the interior facing area via an adhesive layer.

**4.** The method of claim 3, wherein the adhesive layer and the layer that is highly reflective to at least infrared radiation are applied to the interior facing area as a laminate in the form of an adhesive tape or an adhesive film.

**5.** The method of claim 1, wherein the protective film is heat resistant up to a temperature of at least 200°C.

**6.** The method of claim 1, wherein attaching the protective cover to the profile comprises detachably attaching the protective cover to at least one of the first and the second means for attachment to a thermal break, preferably to both of the first and the second means for attachment to a thermal break.

**7.** The method of claim 1 or claim 6, wherein the protective cover is made of: a polymer heat resistant up to a temperature of at least 200°C; aluminum; or an aluminum alloy, preferably wherein the protective cover is made of a polymer heat resistant up to a temperature of at least 200°C.

8. The method of any of the preceding claims, wherein the step of applying a coating to the outer surface comprises one or more of: anodizing the outer surface; powder coating the outer surface; and wet painting the outer surface.

9. The method of any of the preceding claims, wherein the coating on the outer surface of the first profile is a first coating and the coating on the outer surface of the second profile is a second coating, and wherein the first coating is different from the second coating.

10. The method of any of the preceding claims, wherein at least the first profile comprises the layer that is highly reflective to at least infrared radiation, preferably wherein both the first profile and the second profile comprise the layer that is highly reflective to at least infrared radiation.

11. A profile assembly comprising:

    an inner profile having a first coating on an outer surface thereof;
    an outer profile having a second coating on an outer surface thereof; and
    two thermal breaks, wherein the inner profile is connected to the outer profile via the two thermal breaks,
    wherein a cavity is formed between the thermal breaks, an interior facing area of the inner profile; and an interior facing area of the outer profile,
    wherein each interior facing area is independently:

       uncoated with either the first or the second coating; or
       has a layer which is highly reflective to at least infrared applied thereto, wherein the first coating is different from the second coating.

FIG.1

Fig. 2A          FIG.2B          FIG.2C

FIG.3

Europäisches
Patentamt

European
Patent Office

Office européen
des brevets

# EUROPEAN SEARCH REPORT

Application Number

EP 24 20 3469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 360 341 A1 (ALCOA ALUMINIUM DEUTSCHLAND [DE]) 24 August 2011 (2011-08-24) * paragraph [0016]; claim 1 * ----- | 1-7,10 | INV. E06B3/263 |
| X | CN 101 265 780 A (CHINA ACADEMY OF BUILDING) 17 September 2008 (2008-09-17) * page 5.6; figures * ----- | 1-7,10 | |

TECHNICAL FIELDS
SEARCHED        (IPC)

E06B

The present search report has been drawn up for all claims

| Place of search | Date of completion of the search | Examiner |
|---|---|---|
| The Hague | 27 February 2025 | Verdonck, Benoit |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 3469

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2025

| Patent document cited in search report | Publication date | Patent family member(s) | | Publication date |
|---|---|---|---|---|
| EP 2360341 A1 | 24-08-2011 | EP | 2360341 A1 | 24-08-2011 |
| | | EP | 2472047 A1 | 04-07-2012 |
| | | ES | 2388650 T3 | 17-10-2012 |
| | | ES | 2655640 T3 | 21-02-2018 |
| | | PT | 2360341 E | 02-08-2012 |
| | | PT | 2472047 T | 03-01-2018 |
| CN 101 265 780 A | 17-09-2008 | NONE | | |

EPO FORM P0459

For more details about this annex : see Official Journal of the European Patent Office, No. 12/82